# EUROPEAN PATENT SPECIFICATION

(11) **EP 1 534 060 B1**
(45) Date of publication and mention of the grant of the patent: **11.08.2010**
(21) Application number: 03784225.9
(22) Date of filing: 12.08.2003
(51) Int. Cl.: A01G 13/02, C09K 17/52

(54) **BIODEGRADABLE FIBROUS SUPPORT FOR SOIL MULCHING**
BIOLOGISCH ABBAUBARER FASERTRÄGER ZUM MULCHEN VON BÖDEN
SUPPORT FIBREUX BIODEGRADABLE UTILISE POUR LE PAILLAGE DU SOL

(30) Priority: 13.08.2002 FR 0210260
(43) Date of publication of application: 01.06.2005
(73) Proprietor: Ahlstrom Research and Services, 38780 Pont-Evêque (FR); Ahlstrom Corporation, 00180 Helsinki (FI)
(72) Inventor: GIRARD, Pierrick, 38170 Seyssinet-Pariset (FR); DUSSAUD, Joseph, F-38780 Pont-Evêque (FR); VREVIN, Laurence, F-38200 Vienne (FR)
(74) Representative: HOFFMANN EITLE
(86) International application number: PCT/FI2003/000601
(87) International publication number: WO 2004/014124

(56) References cited:
- EP-A1- 0 454 104
- FR-A1- 2 630 293
- FR-A1- 2 813 888
- US-A- 2 961 799
- US-A- 5 163 247
- DATABASE EPODOC EUROPEAN PATENT OFFICE, THE HAGUE, NL; 30 April 1998 (1998-04-30), XP002241439 & SI 9 600 317 A2 (JENKO ANTON MAG DIPL ING) 30 April 1998

## Description

The invention relates to a biodegradable fibrous support for soil mulching, which can be used especially in the field of horticulture, market gardening, landscaping (tree nursery, green spaces).

In the rest of the description, the expression "fibrous support" denotes a support based on coniferous or deciduous unbleached or bleached plant fibres, or fibres of annual plants such as cotton, ramie, jute, flax, hemp etc. or synthetic fibres such as e.g. viscose, these fibres being biodegradable and they can be used by themselves or as a mixture, said support being furthermore able to comprise additives, in a manner that is not exhaustive, such as carbon black, hydrophobic resins (polyamide, epichlorhydrin etc.), fungicide, fungistatic and bactericidal agents, the mass of the support being between 40 g/m² and 200 g/m², advantageously 150 g/m².

The materials for mulching of the soil have to solve a certain number of the following objectives: prevent the weeds from growing shoots, maintain the structure of the soil, control the variations of the climate (moisture, temperature), assure a regular production both quantitatively and qualitatively, and make possible their mechanical application on the ground.

Several types of soil mulching materials are nowadays proposed, among which the plastic films and papers/nonwovens can be distinguished.

Firstly, black plastic sheeting is known, which has the advantage of being solid, despite its low weight per unit area, and thus being weather-resistant. However, this plastic sheeting has a certain number of drawbacks, especially that of not being biodegradable, its lifetime being in the order of 450 - 600 years. For obvious environmental reasons, plastic cannot be buried in the soil. Consequently, when the harvesting has been completed and the grower wishes to plough his land, he must completely remove the plastic. The cost of this operation is estimated to be 20% of the total cost of the mulching.

Moreover, since the plastic heats up very quickly when exposed to solar rays, the leaves of the plant close to the ground adhere and then burn having as consequences, firstly, the decrease of the productivity because of delayed growth and, secondly, they can only be removed with removal of this film. It is estimated that the removal of one ton of plastic entails the removal of one ton of plants and earth that have remained attached to the said plastic. Consequently, the plastic is virtually unrecyclable, the cost of washing it being unacceptably high for such an operation.

To solve the problem related to biodegradability, attempts have been made to manufacture films based on biodegradable materials, such as polymers of polylactic acid (PLA). In this sense, the document FR-A-2 733 520 describes association of a net or a "spunbund" of PLA with a film based on BAPE (biodegradable aliphatic polymer), i.e. a material from fossil resources (oil or gas) by heat sealing. However, this type of product has the inconvenience of being expensive to produce. Moreover, and above all, the fossil resources last for a limited period and, at least as far as oil is concerned, its reserve is estimated to last about forty years (source BP) in 2000. Accordingly, the use of these materials for mulching of the soil is eventually compromised.

The document FR-A-2813 388 describes a liquid composition based on natural latex and stabilizing agents of latex for protecting the soils. In order to be efficient, the solution is deposited in an amount of 0,3 - 1 kg/m² as dry matter of latex. This solution has several disadvantages. First of all, the liquid form of the protection means makes it impossible to think of its use on inclined planes, such as slopes.

Papers and nonwovens form another soil mulching category, the mechanical properties of which, especially their tearing strength, are low compared with plastics.

In order to solve this problem, the document JP8205693 describes a mulching paper, the surface of which is covered with a layer of butadiene-styrene latex and paraffin. However, this paper has the inconvenience of not being biodegradable. The document US-A-5163 247 describes a similar solution with the same disadvantages.

The document JP8205692 describes in turn a mulching paper made from paper pulp containing fumic acid and an oxyquinoline biocid.

The document JP5103553 describes a kraft paper for soil mulching, the surface of which is coated with silicone. Not only does the silicone contain heavy metals (Pt or Sn) coming from the cross-linked agent but, furthermore, it is not biodegradable because of its inert character.

To solve this problem related to biodegradation, the document JP6062680 describes a paper, one face of which is covered with a solution of carbon black and acrylic resin, whereas the other face is coated with a solution of chitosan. However, the presence of acrylic resin implies that the support is not entirely biodegradable.

To solve this problem, the document FR-A-2 016 071 describes mulching papers treated with urea-formaldehyde resins. However, despite this treatment, the paper can break due to the effect of the watering phases, which expand the paper, and of the drying phases which retighten the paper.

The document WO 01/25536 of the Applicant describes a mulching paper comprising a resin based on epichlorhydrin, the paper being degraded by spraying an enzymatic solution capable of destroying both the resin and the cellulose. However, the described papers are adapted to short growing periods e.g. of the lettuce type. In particular, the mentioned paper based on deciduous fibres (20 %), coniferous fibres (50 %) and epichlorhydrin resin (3 %), sold by the Applicant under the trademark SEQUANA^{®}, has a satisfactory strength during 3-4 months only, thus preventing its use for longer growing periods of e.g. 4-5 months for the melons, 9 months for the strawberries, 2-4 years in the field of tree nursery and green spaces.

The document EP 0454104 A1 describes a biodegradable latex web material. The web can contain synthetic fibers to improve the tear strength of the material and in order to improve the tensile strength, the fibrous web is saturated with a latex composition which may be natural, synthetic or a combination of natural and synthetic polymers. Examples of natural polymers are starches, proteins and gums. The above materials, according to the document, when mulched in aerobic soil, rapidly decompose in as short a time as two to three months.

In other words, the problem that the invention aims to solve is that of developing a mulching support based on plant fibres, which would be inexpensive, resistant during the relatively long-term growing, in practice in the order of 1 - 36 months and 100 % biodegradable within a time limit as short as possible after said growing has ended and at a low cost.

To do this, the invention proposes a biodegradable fibrous support for mulching of the soil for long-term growing periods of up to 36 months, said fibrous support being coated with an aqueous solution comprising biodegradable natural latex, where the aqueous solution comprises from 5 to 50 % by weight of biodegradable natural latex obtained from rubber tree, the balance to 100 % including water, and stabilizing and preservative agents of said latex, the solution forming, on the support, a coating of 10 to 200 g/m² as dry matter of latex, advantageously from 90 to 100 g/m², said preservative agents being chosen from the group comprising animal or vegetable proteins, such as glycerin; or chitosan, or tannins or indigo by themselves or as a mixture.

Because of its origin, the latex used is natural, i.e. 100 % biodegradable, and allows in the same time to efficiently reinforce the mechanical properties of the support. Consequently, the natural latex coming from the rubber tree allows reinforcing the mechanical strength of the support during the whole growing period yet without delaying the degradation process of the plant fibres, which is faster than that of the mentioned latex.

In an advantageous embodiment, the fibrous support of the invention can be advantageously coated with an aqueous solution comprising 5 - 50 % by weight of biodegradable natural latex obtained from the rubber tree, the balance to 100 % consisting of water, stabilizing and preservative agents of latex. The synthesis molecules such as bactericides (such as e.g carbendazine, isothiazoline), fungicides or fungistats (such as e.g. potassium sorbate) can also be incorporated into the coating solution, even if for regulation reasons, these substances are more and more avoided.

Among the stabilizers are especially denoted, but in a non limitative manner, the substances chosen from the group comprising the vegetable proteins such as especially casein, soya protein, the mineral fillers such as talc, calcium carbonate, by themselves or as a mixture.

In the list of preservative agents of latex, i.e. of the agents able to avoid the degradation of the latex by the micro-organisms, appear especially the substances chosen from the group comprising the animal proteins such as glycerin, but also the tannins, especially that of mimosa, the natural colouring agent indigo, the chitosan, by themselves or as a mixture. For allowing the fixation of the tannin on the fibrous support, the coating solution contain metallic salts such as e.g. the aluminium sulphate Al₂(SO₄)₃.

It is to be noted that glycerin can be of either vegetable or animal origin.

In practice, the stabilizing agents represent from 1 to 50 % by weight of the coating solution. Also, the preservative agents represent from 1 to 30 % by weight of the coating solution.

According to another characteristic, the coating solution is coated in an amount of 10 to 200 g/m² as dry matter of latex, advantageously between 90 and 100 g/m².

In practice, the latex used is obtained from Hevea Brasiliensis and it has a dry rubber concentration at least of 60%. A latex corresponding to this definition is, for example, the one sold under the trademark ALCANTEX^{®} by the company SAFIC-ALCAN.

Instead of natural latex, the fibrous support of the invention can be advantageously coated with an aqueous solution comprising 5 - 50% by weight of biodegradable prevulcanized natural latex obtained from the rubber tree. Prevulcanized natural latex is, for example, sold under the trademark REVULTEX MR^{®} by the company SAFIC-ALCAN.

The prevulcanized natural latex can be made biodegradable by utilizing sulphur-eating bacteria, like sulfolobus acidocaldarius, for example by adding the bacteria with the prevulcanized natural latex fibrous support. Besides being biodegradable, the prevulcanized natural latex is easier to handle, for example a lifetime is longer if required.

In a particular embodiment, the coating solution consists, by weight, of:
- from 5 to 50%, advantageously from 15 to 25%, biodegradable natural latex obtained from the rubber tree,
- from 1 to 20%, advantageously from 5 to 10%, vegetable proteins,
- from 0 to 20%, advantageously from 5 to 10%, talc,
- from 0,1 to 1%, advantageously 0,5%, biocide,
- the balance to 100 % consisting of water.

In an advantageous embodiment, the biocides represent from 1 to 20 % by weight of the solution and are composed of chitosan and/or indigo, and/or glycerin, and/or tannin, by themselves or as a mixture.

In practice, the fibrous support is coated with a latex-based solution by a size press after the fibrous support has been obtained. The spreading method can also vary according to the production means and the use of a coating machine, a spraying, impregnation or any other depositing device is also acceptable.

Moreover, for mechanically reinforcing the mulching support even more, the said support may further contain thermobonding biodegradable synthetic fibres representing 5 - 50 %, advantageously 10 -15 %, by weight of the support.

In the rest of the description and in the claims, the expression "thermobonding fibres" denotes short fibres having a size of between 1 and 30 mm, preferably in the order of 5 mm, the average melting point of which is between 60°C and 180°C, these fibres being able to melt during the manufacturing process of the support so as to bind the fibres nearby and to strengthen the mechanical properties of the said support. In practice, the fibres are chosen so that they melt at the temperature, at which the support is manufactured, which is about 100°C if the support is manufactured on a paper machine and about 170°C if the support is manufactured on a nonwoven machine.

The thermobonding fibres of the invention may have a unique or double melting point on the assumption that the fibre is in the form of a so-called "bicomponent" fibre, corresponding to a fibre comprising two polymers having distinct physical and/or chemical characteristics, extruded from the same die for forming a single filament. In other words, the fibre in is the form of a core, having a first melting point surrounded by a sheath having a second lower melting point. This is e.g. the case with PLA (polylactic acids) fibres sold by UNITIKA under the trademark TERRAMAC^{®}, especially under the reference PL80, the core and sheath melting points of which are equal to 170°C and 130°C, respectively.

In order to still reinforce the support, it may be provided with a grid, which is either maintained on the whole part of at least one face of the support, or incorporated into the whole or part of the mass of the support.

In the rest of the description and in the claims, the expression "grid" denotes a grid formed by a network of crossed non-woven threads comprising at least two webs of warp and weft threads, these warp and weft threads being interconnected at their crossings by a bonding agent creating a series of gluing points. This type of a grid and its manufacturing process are described e.g. in the document EP-A-1 111 114.

In practice, the grid is produced of biodegradable polymers chosen from the group comprising polylactic acid, polycaprolactone, viscose, modified viscose such as of the LYOCELL or MODAL type, polyhydroxybutyrate and polyhydroxyalcanoate, by themselves or as a mixture. In an advantageous embodiment, the grid is produced exclusively of modified viscose threads and corresponds e.g. to the grid sold by CHAVANOZ INDUSTRIE under the reference 4032/71. According to another embodiment, the grid is produced solely from polylactic acid fibres such as those sold e.g. under the trademark TERRAMAC^{®} by the company UNITIKA.

In practice, the grid has a weight of between 10 and 50 g/m², advantageously in the order of 20 g/m².

According to a first embodiment of the invention, the grid is maintained on the whole surface of the support, on at least one of the both faces according to preference, the grid being able to be placed facing either the soil or the sky. In this case, the mulching will be more particularly adapted to long growing of several months.

In a more economical second embodiment, the grid is placed exclusively in the area of fixing points of the support in the soil, i.e. in the area of air/ground/substrate interface. The Applicant has in fact noticed that the micro organisms in the soil degraded the support and had an important effect on its strength at the fixing points, making it especially sensitive to the weather, especially to the wind. The fitting of the grid in the area of these fixing points, on one or both of the support faces, thus allows slowing down its biodegradation at the points that are sensitive, yet without affecting this process, which is slower, on the part which is not buried.

In practice, the grid is glued directly against the surface of the finished fibrous support by means of biodegradable water-resistant glue chosen from the group comprising ethylene polyvinylic alcohol (EVOH) and polyvinylic alcohol (PVA), by themselves or as a mixture. In practice, the glue represents between 5 and 50 %, advantageously 15 %, by weight of the grid.

Moreover and according to another characteristic, the support may be subjected to a lime sludge/ micrite coating step before or after gluing of the grid.

In a third embodiment, the grid is not glued but directly integrated into the mass of the support during the manufacturing process of the latter. Here again, the grid may be arranged over the whole surface of the support or exclusively in the area of the fixing points of the support on the ground. In practice, the grid is unrolled directly on the fibrous support during formation on the wire of the paper machine or non-woven machine, the grid in the finished product thus being entangled to the surface of the support. Furthermore, with this technique, glue is no longer needed.

When the grid is glued against the surface of the support, the coating of the support by the latex-based solution from the rubber tree can be carried out before or after the fixing of the grid. In any case, whether the grid is incorporated during the manufacturing process or glued, the coated material obtained can be subjected to a lime sludge/ micrite coating step, that is to say to dry creping.

According to another characteristic, the fibrous support may contain a hydrophobic resin representing 0,5 - 15%, advantageously 6 - 8%, by weight of the support, chosen from the group comprising urea-formaldehyde resins, melamine-formaldehyde resins, polyamide-amine-epichlorhydrin resins, polyethyleneimine resins, starch derivatives, by themselves or as a mixture.

In the same way, depending on the colour of the fibres used, the support may further comprise carbon black representing 0,5 - 4% by weight of the support.

The latex-based coating from the rubber tree, possibly in the presence of individual thermobonding fibres distributed within the support and/or the grid based on biodegradable material, allows to maintain the mechanical resistance of the support during the whole growing period, yet without affecting the actual degradation process of plant fibres making up the said support. However, this actual degradation process of the support is directly dependent on its composition. In other words, the problem is how to define support compositions according to the desired growing periods.

Consequently and in a first embodiment, the support fibre composition denoted hereinafter "support 1" is as follows:
- from 40 to 100%, advantageously from 70 to 90%, by weight of coniferous unbleached or bleached kraft fibres,
- from 0 to 60%, advantageously from 10 to 30%, of deciduous unbleached or bleached kraft fibres,
   grammage: from 40 to 200 g/m², advantageously from 55 to 75 g/m².

This type of fibrous composition will be especially suitable for short growing periods from about 1 to 6 months.

In a second embodiment, the fibre support composition denoted hereinafter "support 2" is as follows:
- from 80 to 100% by weight of annual plant fibres,
- from 0 to 20%, advantageously from 5 to 15%, by weight of coniferous unbleached or bleached kraft fibres.
- grammage: from 40 to 200 g/m², advantageously from 90 to 100 g/m².

The fibres from annual plants can come from all types of annual plants rich in fibres, which can be used in paper mills and in the filed of non-woven e.g. of the cotton, ramie, jute, flax, hemp etc. type. In an advantageous embodiment, the fibrous composition contains only fibres that come from annual plants.

This type of fibrous composition will be especially suitable for longer growing periods from about 6 to 18 months.

In a third embodiment, the fibre support composition denoted hereinafter "support 3" is as follows:
- from 20 to 100% by weight of coniferous bleached kraft fibres, advantageously from red cedar wood-oil,
- from 0 to 40%, advantageously 20 - 30%, by weight of fibres from annual plants,
- from 0 to 40%, advantageously from 20 to 30%, by weight of rayon or viscose fibres.
- grammage: from 40 to 200 g/m², advantageously 100 g/m².

In practice, the supports are manufactured on a nonwoven machine, and then bound by mechanical and/or hydraulic needling. The support can also be manufactured by a carding process and then bound by a mechanical and/or hydraulic needling process.

In an advantageous embodiment of the support 3, the fibrous composition further contains a very small amount of bactericide carbon fibres, that is to say carbon fibres doped with silver salts, in the order of 0,5 - 2% by weight.

This type of fibrous composition will be especially suitable for longer growing periods from about 18 to 36 months.

The invention and the advantages which stem therefrom will become more apparent from the following illustrative examples.

### Example 1

A support with the following composition, by dry weight, was prepared:
- 93% of fibre suspension comprising 100% by weight of coniferous unbleached kraft fibres
- 3% of epichlorhydrin resin
- 4% of carbon black
- grammage: 75 g/m²

A sheet is formed on a paper machine from all constituents of the support. When the sheet has been formed and dried, it is coated in a size press with a solution comprising, by weight, of:
- 50% natural latex sold under the trademark ALCANTEX^{®} by the company SAFIC-ALCAN
- 5% proteins,
- 10% talc,
- 1% biocide,
- 34% water.

Finally, the coated support obtained is dried

### Example 2:

The same procedure as for the support 1 was produced, with the exception that the fibre suspension comprises 100% by weight of annual plant fibres (cotton, ramie, jute, flax, hemp).

### Example 3

A support with the following composition, by dry weight, was produced:
- 93% of fibre suspension comprising:
   - 50% by weight of coniferous bleached kraft fibres, red cedar wood-oil
   - 25% by weight of annual plants (cotton, ramie, jute, flax, hemp)
   - 25% by weight of rayon fibres
- 3% of epichlorhydrin resin
- 4% of carbon black
- grammage: 100 g/m²

A sheet in formed on a paper machine from all constituents of the support. The sheet to be formed is subjected to a hydraulic entanglement step known by the name JETLACE. Once the sheet is formed and dried, it is coated in a size press with a solution consisting (by weight) of:
- 50% natural latex sold under the trademark ALCANTEX^{®} by the company SAFIC-ALCAN
- 5% proteins,
- 10% talc,
- 1% biocide,
- 34% water.

Finally, the coated support obtained is dried.

### Example 4:

For each of the examples 1- 3, prior to the coating phase with a latex-based solution, a modified viscose grid sold by CHAVANOZ INDUSTRIE under the reference 4032/71 is unrolled on the sheet to be formed.

### Example 5

The examples 1-4 were repeated by incorporating 20% by weight of PLA-fibres, the average size of which is of 5 mm, sold by UNITIKA under the trademark TERRAMAC^{®} under the reference PL80 to the detriment of the fibre suspension.

## Claims

1. A biodegradable fibrous support for mulching of the soil for long-term growing periods of up to 36 months, said fibrous support being coated with an aqueous solution comprising biodegradable natural latex, **characterized in that** the aqueous solution comprises from 5 to 50 % by weight of biodegradable natural latex obtained from rubber tree, the balance to 100% including water, and stabilizing and preservative agents of said latex, the solution forming, on the support, a coating of 10 to 200 g/m² as dry matter of latex, advantageously from 90 to 100 g/m², said preservative agents being chosen from the group comprising animal or vegetable proteins, such as glycerin; or chitosan, or tannins or indigo by themselves or as a mixture.

2. A support according to Claim 1, **characterized in that** said natural latex is prevulcanized.

3. A support according to Claim 1, **characterized in that** the natural latex is obtained from Hevea Brasiliensis and has a dry rubber concentration of at least of 60 %.

4. A support according to Claim 1, **characterized in that** the stabilizing agents are chosen from the group comprising the vegetable proteins, such as casein, tannins or indigo or soy protein or glycerin; or the mineral fillers, such as talc or calcium carbonate; by themselves or as a mixture.

5. A support according to Claim 1, **characterized in that** the coating solution consists, by weight, of:
- from 5 to 50 %, biodegradable natural latex obtained from rubber tree,
- from 1 to 20 %, proteins,
- from 0 to 20 %, talc,
- from 1 to 20 % of chitosan, and/or indigo, and/or glycerin, and/or tannins,
- the balance to 100 % consisting of water.

6. A support according to Claim 1, **characterized in that** it contains thermo-bonding fibres representing from 5 to 50 %, advantageously between 10 and 15 %, by weight, of the support.

7. A support according to Claim 6, **characterized in that** the thermo bonding fibres are exclusively composed of polylactic acid fibres.

8. A support according to Claim 1, **characterized in that** it is provided with a grid, which is either maintained on the whole or part of at least one face of the support, or incorporated into the whole or part of the mass of the support, said grid being produced of a biodegradable polymers chosen from the group comprising polylactic acid, polycaprolactone, viscose, modified viscose, polyhydroxybutyrate and polyhydroxyalcanoate, by themselves or as a mixture.

9. A support according to Claim 8, **characterized in that** the grid is made exclusively of modified viscose threads.

10. A support according to Claim 8, **characterized in that** the weight of the grid is between 10 and 50 g/m², advantageously in the order of 20 g/m².

11. A support according to Claim 8, **characterized in that** the grid is positioned exclusively in the area of the fixing points of the support on the ground.

12. A support according to Claim 8, **characterized in that** the grid is glued directly on the surface of the fibrous support by means of a water-resistant biodegradable glue chosen from the group comprising ethylene polyvinylic alcohol (EVOH) and polyvinylic alcohol (PVA), by themselves or as a mixture, the glue representing between 5 and 50 %, advantageously 15 %, by weight of the grid.

13. A support according to Claim 8, **characterized in that** the grid is unrolled directly on the fibrous support during its manufacture.

14. A support according to Claim 1, **characterized in that** it it contains a hydrophobic resin representing from 0,5 to 15 % by weight of the support, chosen from the group comprising urea-formaldehyde resins, melamine-formaldehyde resins, polyamide-amine-epichlorhydrin resins, polyethyleneimine resins, starch derivatives, by themselves or as a mixture.

15. A support according to Claim 1, **characterized in that** it contains carbon black representing from 0,5 to 4 % by weight of the support.

16. A support according to Claim 1, **characterized in that** the fibre composition of the support is as follows:
- from 40 to 100 %, advantageously from 70 to 90 %, by weight of coniferous unbleached or bleached kraft fibres;
- from 0 to 60 %, advantageously from 10 to 30 %, by weight of deciduous unbleached or bleached kraft fibres.

17. Support according to Claim 1, **characterized in that** the fibre composition of the support is as follows:
- from 80 to 100 % by weight of annual plant fibres,
- from 0 to 20 % by weight of coniferous unbleached or bleached kraft fibres.

18. Support according to Claim 1, **characterized in that** the fibre composition of the support is as follows:
- from 20 to 100 % by weight of coniferous bleached kraft fibres,
- from 0 to 40 % by weight of annual plant fibres,
- from 0 to 40 % by weight of rayon fibres.

## Patentansprüche

1. Bioabbaubare faserige Stützschicht zum Mulchen des Bodens für lange Wachstumsperioden von bis zu 36 Monaten, welche faserige Stützschicht mit einer wässrigen Lösung beschichtet wird, die biologisch abbaubaren natürlichen Latex enthält, **dadurch gekennzeichnet, dass** die wässrige Lösung 5 bis 50 Gewichtsprozent biologisch abbaubaren natürlichen Latex enthält, der aus dem Gummibaum gewonnen wird, wobei der Rest zu 100 % Wasser und Stabilisierungs- und Konservierungsmittel des Latex enthält, wobei die Lösung auf der Stützschicht eine Beschichtung von 10 bis 200 g/m² Trockensubstanz von Latex, vorteilhafterweise von 90 bis 100 g/m² enthält, welche Konservierungsmittel aus der Gruppe gewählt werden, die tierische oder pflanzliche Proteine, etwa Glyzerin; oder Chitosan oder Tannine oder Indigo als solche oder als Mischung umfasst.

2. Stützschicht nach Anspruch 1, **dadurch gekennzeichnet, dass** der natürliche Latex vorvulkanisiert ist.

3. Stützschicht nach Anspruch 1, **dadurch gekennzeichnet, dass** der natürliche Latex aus Hevea Brasiliensis gewonnen wird und eine Trockengummikonzentration von zumindest 60 % aufweist.

4. Stützschicht nach Anspruch 1, **dadurch gekennzeichnet, dass** die Stabilisierungsmittel aus der Gruppe gewählt werden, die pflanzliche Proteine, etwa Kasein, Tannine oder Indigo oder Soja-Protein oder Glyzerin; oder mineralische Füllstoffe, etwa Talkum oder Kalziumkarbonat; als solche oder als Mischung umfasst.

5. Stützschicht nach Anspruch 1, **dadurch gekennzeichnet, dass** die Beschichtungslösung gewichtsmäßig besteht aus:
- 5 bis 50 % biologisch abbaubarem natürlichem Latex, der aus dem Gummibaum gewonnen wird
- 1 bis 20 % Proteinen,
- 0 bis 20 % Talkum,
- 1 bis 20 % Chitosan, und/oder Indigo, und/oder Glyzerin, und/oder Tanninen,
- wobei der Rest zu 100 % aus Wasser besteht.

6. Stützschicht nach Anspruch 1, **dadurch gekennzeichnet, dass** sie Thermofusionsfasern enthält, die 5 bis 50, vorteilhafterweise zwischen 10 und 15 Gewichtsprozent, der Stützschicht ausmachen.

7. Stützschicht nach Anspruch 6, **dadurch gekennzeichnet, dass** sich die Thermofusionsfasern ausschließlich aus Polymilchsäure-Fasern zusammensetzen.

8. Stützschicht nach Anspruch 1, **dadurch gekennzeichnet, dass** sie mit einem Gitter versehen ist, das entweder auf der gesamten oder einem Teil zumindest einer Oberfläche der Stützschicht gehalten ist oder in die gesamte Masse der Stützschicht oder einen Teil davon integriert ist; welches Gitter aus einem biologisch abbaubaren Polymer hergestellt ist, das aus der Gruppe gewählt wird, die Polymilchsäure, Polykaprolakton, Viskose, modifizierte Viskose, Polyhydroxybutyrat und Polyhydroxyalkanoat als solche oder als Mischung umfasst.

9. Stützschicht nach Anspruch 8, **dadurch gekennzeichnet, dass** das Gitter ausschließlich aus Fäden aus modifizierter Viskose hergestellt ist.

10. Stützschicht nach Anspruch 8, **dadurch gekennzeichnet, dass** das Gewicht des Gitters zwischen 10 und 50 g/m², vorteilhafterweise in der Größenordnung von 20 g/m² ist.

11. Stützschicht nach Anspruch 8, **dadurch gekennzeichnet, dass** das Gitter ausschließlich im Bereich der Befestigungsstellen der Stützschicht auf dem Boden positioniert ist.

12. Stützschicht nach Anspruch 8, **dadurch gekennzeichnet, dass** das Gitter direkt auf die Oberfläche der faserigen Stützschicht mit einem wasserfesten biologisch abbaubaren Klebstoff geklebt wird, der aus der Gruppe gewählt wird, die Ethylen-Polyvinylalkohol (EVOH) und Polyvinylalkohol (PVA) als solche oder als Mischung umfasst, welcher Klebstoff zwischen 5 und 50 %, vorteilhafterweise 15 % Gewichtsprozent vom Gitter ausmacht.

13. Stützschicht nach Anspruch 8, **dadurch gekennzeichnet, dass** das Gitter direkt auf die faserige Stützschicht während ihrer Herstellung aufgerollt wird.

14. Stützschicht nach Anspruch 1, **dadurch gekennzeichnet, dass** sie ein hydrophobes Harz enthält, das 0,5 bis 15 Gewichtsprozent der Stützschicht ausmacht, das aus der Gruppe gewählt wird, die Harnstoff-Formaldehyd-Harze, MelaminFormaldehyd-Harze, Polyamid-Amin-Epichlorhydrin-Harze, Polyethylen-Imin-Harze, Stärkederivate als solche oder als Mischung umfasst.

15. Stützschicht nach Anspruch 1, **dadurch gekennzeichnet, dass** sie Kohlenschwarz enthält, das 0,5 bis 4 Gewichtsprozent der Stützschicht ausmacht.

16. Stützschicht nach Anspruch 1, **dadurch gekennzeichnet, dass** die Faserzusammensetzung der Stützschicht wie folgt ist:
- 40 bis 100, vorteilhafterweise 70 bis 90 Gewichtsprozent ungebleichte oder gebleichte Nadelholz-Kraftfasern;
- 0 bis 60, vorteilhafterweise 10 bis 30 Gewichtsprozent ungebleichte oder gebleichte Laubholz-Kraftfasern.

17. Stützschicht nach Anspruch 1, **dadurch gekennzeichnet, dass** die Faserzusammensetzung der Stützschicht wie folgt ist:
- 80 bis 100 Gewichtsprozent Fasern von Einjahrespflanzen,
- 0 bis 20 Gewichtsprozent ungebleichte oder gebleichte Nadelholz-Kraftfasern.

18. Stützschicht nach Anspruch 1, **dadurch gekennzeichnet, dass** die Faserzusammensetzung der Stützschicht wie folgt ist:
- 20 bis 100 Gewichtsprozent gebleichte Nadelholz-Kraftfasern,
- 0 bis 40 Gewichtsprozent Fasern von Einjahrespflanzen,
- 0 bis 40 Gewichtsprozent Kunstseidefasern.

## Revendications

1. Support fibreux biodégradable pour paillage de sol pour périodes de culture de longue durée jusqu'à 36 mois, ledit support étant enduit d'une solution aqueuse comprenant le latex naturel biodégradable, **caractérisé en ce que** la solution aqueuse comprend de 5 à 50% en poids de latex naturel biodégradable obtenu à partir de l'hévéa, le complément à 100% comprenant l'eau, et les agents stabilisants et préservateurs du latex, la solution formant sur le support une enduction de 10 à 200 g/m² en sec de latex, avantageusement de 90 à 100 g/m², ledit agent préservateur étant choisi du groupe comprenant les protéines animales ou végétales, telles que la glycérine ou la chitosane ou les tannins ou l'indigo, seuls ou en mélange.

2. Support selon la revendication 1, **caractérisé en ce que** ledit latex naturel est prévulcanisé.

3. Support selon la revendication 1, **caractérisé en ce que** ledit latex est obtenu à partir de l'Hévéa Brasiliensis et présente une concentration en caoutchouc sec au moins égale à 60%.

4. Support selon la revendication 1, **caractérisé en ce que** les agents stabilisants sont choisis dans le groupe comprenant les protéines végétales telles que la caséine, les tannins ou l'indigo ou la protéine de soja ou la glycérine ; ou les charges minérales telles que le talc ou le carbonate de calcium ; seuls ou en mélange.

5. Support selon la revendication 1, **caractérisé en ce que** la solution d'enduction contient en poids :
- de 5 à 50 % de latex naturel biodégradable obtenu à partir de l'hévéa,
- de 1 à 20 % de protéines,
- de 0 à 20 % de talc,
- de 1 à 20 % de chitosane, et/ou d'indigo, et/ou de glycérine, et/ou de tannins,
- le complément à 100 % en eau.

6. Support selon la revendication 1, **caractérisé en ce qu'**il contient des fibres thermoliantes représentant entre 5 à 50% en poids, avantageusement entre 10 et 15% en poids du support.

7. Support selon la revendication 6, **caractérisé en ce que** les fibres thermoliantes sont constituées exclusivement de fibres d'acide polylactique.

8. Support selon la revendication 1, **caractérisé en ce qu'**il est muni d'une grille soit maintenue sur toute ou partie d'au moins une face du support, soit incorporée dans toute ou partie de la masse du support, ladite grille étant réalisée à partir de polymères biodégradables choisis dans le groupe comprenant l'acide polylactique, le polycaprolactone, la viscose, la viscose modifiée, le polyhydroxybutyrate et le polyhydroxyalcanoate, seuls ou en mélange.

9. Support selon la revendication 8, **caractérisé en ce que** la grille est réalisée exclusivement en fils de viscose modifiée.

10. Support selon la revendication 8, **caractérisé en ce que** le poids de la grille est compris entre 10 et 50 g/m², avantageusement de l'ordre de 20 g/m².

11. Support selon la revendication 8, **caractérisé en ce que** la grille est positionnée exclusivement au niveau des points d'ancrage du support dans le sol.

12. Support selon la revendication 8, **caractérisé en ce que** la grille est contrecollée directement sur la surface du support fibreux au moyen d'une colle biodégradable résistante à l'eau choisie dans le groupe comprenant l'éthylène alcool polyvinylique (EVOH) et l'alcool polyvinylique (PVA), seuls ou en mélange, la colle représentant entre 5 et 50% en poids de la grille, avantageusement 15% en poids.

13. Support selon la revendication 8, **caractérisé en ce que** la grille est déroulée directement sur le support fibreux lors de sa fabrication.

14. Support selon la revendication 1, **caractérisé en ce qu'**il contient une résine hydrophobe représentant de 0,5 à 15% en poids du support, choisie dans le groupe comprenant les résines urée-formaldéhydes, les résines mélamine-formaldéhydes, les résines polyamide-amine-épichlorhydrines, les résines polyéthylène-imines, les dérivés de l'amidon, seuls ou en mélange.

15. Support selon la revendication 1, **caractérisé en ce qu'**il contient du noir de carbone représentant de 0,5 à 4% en poids du support.

16. Support selon la revendication 1, **caractérisé en ce que** la composition en fibres du support est la suivante :
• de 40 à 100 % en poids de fibres de résineux kraft écrues ou blanchies, avantageusement 70 à 90 % ;
• de 0 à 60 % en poids de fibres de feuillus kraft écrues ou blanchies, avantageusement 10 à 30 %.

17. Support selon la revendication 1, **caractérisé en ce que** la composition en fibres du support est la suivante :
• de 80 à 100 % en poids de fibres de plantes annuelles,
• de 0 à 20 % en poids de fibres de résineux kraft écrues ou blanchies.

18. Support selon la revendication 1, **caractérisé en ce que** la composition en fibres du support est la suivante :
• de 20 à 100 % en poids de fibres de résineux kraft blanchies,
• de 0 à 40 % en poids de fibres de plantes annuelles,
• de 0 à 40% en poids de fibres de rayonne.
